# EUROPEAN PATENT SPECIFICATION

(11) **EP 1 244 252 B1**
(45) Date of publication and mention of the grant of the patent: **25.03.2009**
(21) Application number: 99959826.1
(22) Date of filing: 15.12.1999
(51) Int. Cl.: H04L 12/66

(54) **GATEWAY AND DISTRIBUTED SYSTEM USING THE GATEWAY**
GATEWAY UND EIN DAS GATEWAY BENUTZENDES VERTEILTES SYSTEM
PASSERELLE ET SYSTEME REPARTI UTILISANT LADITE PASSERELLE

(43) Date of publication of application: 25.09.2002
(73) Proprietor: Hitachi, Ltd., Tokyo 100-8280 (JP)
(72) Inventor: YOKOYAMA, Takanori, c/o Hitachi Research Laboratory, Hitachi-shi, Ibaraki 319-1292 (JP); NAGAURA, Wataru, c/o Hitachi Research Laboratory, Hitachi-shi, Ibaraki 319-1292 (JP)
(74) Representative: Beetz & Partner
(86) International application number: PCT/JP1999/007042
(87) International publication number: WO 2001/045329

(56) References cited:
- WO-A-97/24842
- JP-A- 11 024 710
- JP-A- 11 338 837
- US-A- 5 365 512
- US-A- 5 475 683
- AKIHIRO TANAKA ET AL.: 'Gateway application for automotive net-work system "BEAN"' SAE TECHNICAL PAPER SERIES, 1999-01-1278 (INTERNATIONAL CONGRESS AND EXPOSITION) 01 March 1999 - 04 March 1999, DETROIT, MICHIGAN, XP002923616
- AKIHIRO ET AL.: 'Development of a car-mounted GATEWAY ECU' FUJITSU TEN GIHOU vol. 16, no. 2, 1998, pages 36 - 42, XP002923617
- THOMAS DEDELMAHR ET AL.: 'C167CR bringt gateway-funktionalitaet in den bordrechner' SIEMENS, COMPONENTS vol. 35, no. 5/6, 1997, pages 44 - 45, XP002923618

## Description

### TECHNICAL FIELD

This invention relates to a gateway for connecting a plurality of networks having different characters, and a distributed system using this gateway.

### BACKGROUND TECHNIQUE

In a recent automobile, various electronic apparatus are loaded including an audio instrument, a navigation device, an engine controlling device, a driving device for a mission etc., for example, and these electronic apparatuses are connected to networks depending upon their characters. To a network for an information system, an apparatus operating by an input (input of an event) from the outside, such as an audio instrument, and to a network for a control system, an apparatus for outputting information at a predetermined period, such as an engine controlling apparatus is connected.

Japanese Patent Application JP 1999 0118647 discloses a gateway for connecting between plural LANs which are different in protocol.

However, in such prior art publication, there is no description for a gateway connecting the networks which are different in character, one being so called information system network, and the other so called control system network, for example. Specifically, there is not disclosed in the above-mentioned publication, the transmission of information between the information system in which information is transmitted in response to an event and the control system network in which information is transmitted at a constant period.

WO 97/24842 discloses a method and a system for resilient frame relay networks and a system for resilient frame relay network interconnection. For frame relay networks interconnected by a self-healing network, a standard protocol is provided which allows a resilient network-to-network interface to automatically respond to physical interface failures detected by the self-healing network. Switching gateways in the resilient interface re-root further graphic to avoid the failed physical interface. In one embodiment, a simple set of interacting protocols and mechanisms control communication between gateways and switches. Each gateway includes interworking function processing modules for converting user data between frame relay packets and cells and for processing status signalling messages to achieve a resilient interface.

### DISCLOSURE OF THE INVENTION

An object of this invention is to provide a distributed system for an automobile including different types of network capable of communicating with each other.

This object is accomplished in accordance with the features claim 1. Dependent claims are directed on preferred embodiments of the invention.

A distributed system according to the invention has a gateway performing the send and receive of a message which is transmitted periodically, and the send and receive of a message which is transmitted in response to an event, or request or demand.

Also, the gateway, upon the detection of the change of a periodical message received from one network, sends a message to another network.

Also, the gateway periodically sends a message received from one network to another network.

### BRIEF EXPLANATION OF THE DRAWINGS

Fig. 1 is a diagram showing the construction of a gateway according to one embodiment of this invention;
Fig. 2 is a flow chart showing a periodical message receiving process according to one embodiment of this invention;
Fig. 3 is a diagram showing the construction of a period/event massage buffer according to one embodiment of this invention;
Fig. 4 is a flow chart showing a message value change detecting process according to one embodiment of this invention;
Fig. 5 is a flow chart showing an event massage sending process according to one embodiment of this invention;
Fig. 6 is a diagram showing one example of operation in a message transfer from a control system network to an information system network according to one embodiment of this invention;
Fig. 7 is a flow chart showing the flow of an event message receiving process according to one embodiment of this invention;
Fig. 8 is a diagram showing the construction of an event/period message buffer according to one embodiment of this invention;
Fig. 9 is a flow chart showing a periodical message sending process according to one embodiment of this invention;
Fig. 10 is a diagram showing one example of operation in a message transfer from an information system network to a control system network according to one embodiment of this invention;
Fig. 11 is a diagram showing the construction of a distributed system according to one embodiment of this invention;
Fig. 12 is a diagram showing the construction of a distributed system according to another embodiment of this invention.

### BEST MODE FOR EMBODYING THE INVENTION

Hereinafter, embodiments of this invention will be explained in detail using attached drawings.

First of all, a first embodiment of this invention will be explained. This invention is intended to handle an event massage mode in which a message is output from a processing apparatus onto a network in response to the generation of an event, and a periodical message mode in which a message is output from the processing apparatus onto a network at a predetermined period, and it enables the exchange of messages between a network to which the processing apparatus which outputs the event message is connected (hereinafter, "an information system network" is referred to) and a network to which the processing apparatus which outputs the periodic message (hereinafter, "a control system network" is referred to).

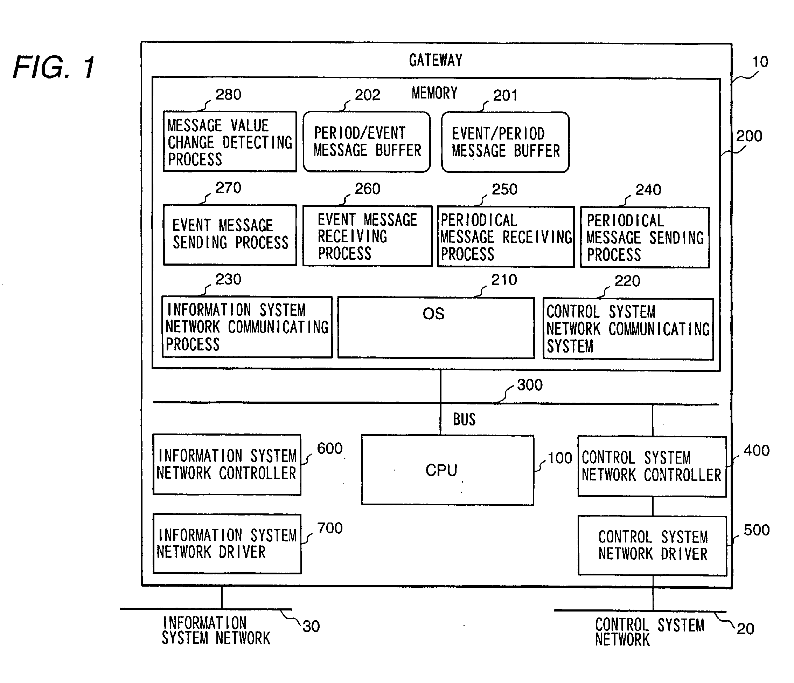

Fig. 1 shows the construction of a gateway according to this invention. The gateway 10 is connected to the control system network 20 and the information system network 30. A CAN (Controller Area Network) is used for the control system network 20 and information system network 30 according to this embodiment.

The gateway 10 is comprised of a CPU 100, a memory 200, a bus 300, a control system network controller 400, a control system network driver 500, an information system network controller 600 and an information system network driver 700.

The CPU 100, the memory 200, the control system network controller 400, the information system network controller 600 are connected to the bus 300 which is a signal line. The CPU 100 reads out the program stored in the memory 200, controlling the control system network controller 400, the control system network driver 500, the information system network controller 600 and the information system network driver 700, so that the exchange of the messages is performed between the information system network 20 and the control system network 30.

The control system network controller 400 is connected to the control system network driver 500 and the control system network driver 500 is connected to the control system network 20, so that the message transmission to the control system network 20 is carried out. The information system network controller 600 is connected to the information system network driver 700 and the information system network driver 700 is connected to the information system network 30, so that the message transmission to the information system network 30 is carried out.

The memory 200 has a program stored for running an OS (Operating System) and application programs stored for a control system network communicating process 220, an information system network communicating process 230, a periodical message sending process 240, a periodical message receiving process 250, an event massage receiving process 260, an event message sending process 270 and a message value change detecting process 280, and the memory 200 also has data storing areas such as an event/period message buffer 201 and a period/event message buffer 202.

As the OS 210 in this embodiment, the OSEK-OS described in OSEK/VDX Operating System Version 2.0 revision 1 (1997) published by OSEK/VDX is utilized. Thus, by using the OS, it is possible to cause the application programs to start up periodically as tasks, and the message on the network to start up by the received event.

Also, as the control system network communicating process 220, the OSEK-COM described in OSEK/VDX Communication Version 2.1 revision 1 (1998) published by OSEK/VDX is utilized. The OSEX-COM has its function effecting both of the massage sending process and the message receiving process. Also, it has a function of specifying a message for reception by ID attached thereto. Therefore, it is possible to specify a message to be received within the periodic messages on the control system network 20. In case where a message is transmitted to the control system network 20, by calling out Send Message () which is one API Service of the OSEK-COM from the application program for performing the periodic message sending process, it is possible to transmit the message onto the control system network 20 through the control system network controller 400. Also, in receiving the message from the control system network 20, the predetermined ID of the message to be received has been managed, and when the massages having the same ID are received the control system network controller 400 performs reception interrupt. In response to the reception interrupt from the control system network controller 400, an interrupt process for the message reception of the control system network communicating process is started up, and it becomes possible to take the message on the control system network 20. The message fetched in can be read out by calling out Receive Message () which is one of the API Services of the OSEK-COM.

In this embodiment, the information system network communicating process 230 also uses the OSEK-COM. Therefore, also in case where the message is sent to the information system network 30, an application program for performing the transmission process of the event message is executed by calling out therefrom Send Message ( ) which is one of the API Services of the OSEK-COM, the message can be sent onto the information system network 30 through the information system network controller 600. Also, in receiving the message from the information system network 30, the predetermined ID of the message to be received has been managed, and when the massages having the same ID are received the information system network controller 600 performs reception interrupt. In response to the reception interrupt from the information system network controller 600, an interrupt process for the message reception of the information system network communicating process is started up, and it becomes possible to take the message on the information system network 30. The message fetched in can be read out by calling out Receive Message () which is one of the API Services of the OSEK-COM.

Next, the operation of the gateway 10 according to this embodiment will be explained. First, the case where a message is transferred from the control system network 20 handling the periodical message to the information system network 30 handling the event message will be explained.

As stated above, when the control system network controller 400 receives a message having a predetermined ID from among a plurality of periodical messages on the control system network, it perform an interruption. In response thereto, the OS 210 starts up the program of the periodical message receiving process 250. This program of the periodical message receiving process 250 is executed as one task. Since on the control system network 20 the massage is transmitted periodically, this process (task) is also started up periodically.

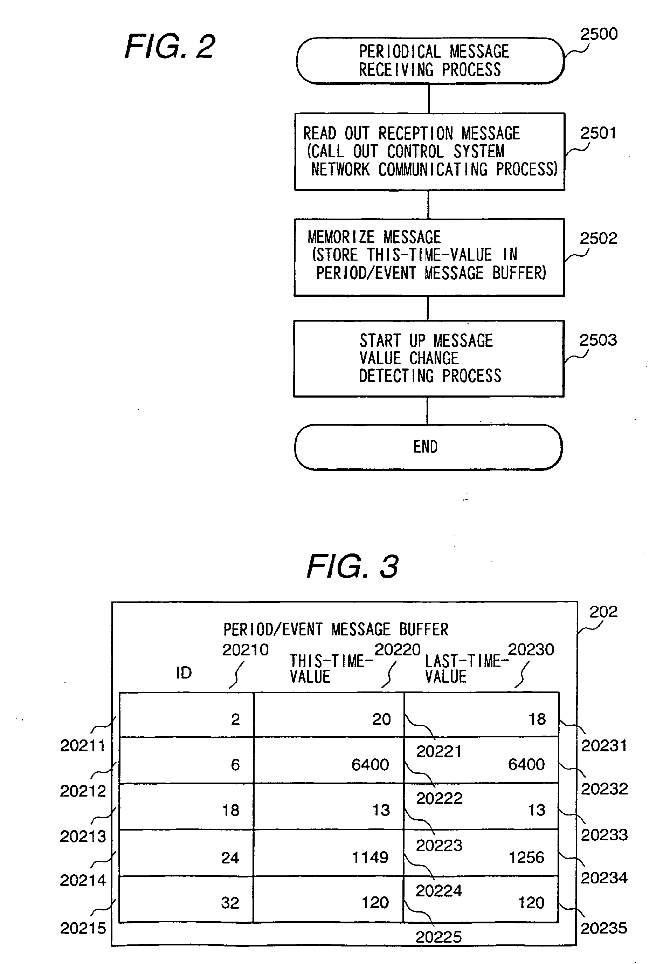

The processing flow of a periodical message receiving Process 2500 which is the process of the periodical message receiving process 250 will be explained using Fig. 2. First, the periodical message receiving Process 2500 reads out a received message which was taken from the control system network 20 (Process 2501). This is executed by calling out Receive Message () of the control system network communicating process 220, as mentioned above.

Next, the message read out is stored in the period/event message buffer 202 (Process 2502). Now, the construction of the period/event message buffer 202 will be explained using Fig. 3. As explained above, a message has ID (identifier) attached thereto. The period/event message buffer 202 includes a message ID storing area 20210, a this-time-value (value of the most recent message) storing area 20220 and a last-time-value (value of the message received most previously after the most recent message) storing area 20230. Further, these areas are divided into storing areas per ID. That is, the ID storing area 20210 comprises an area 20211, an area 20212, an area 20213, etc. The this-time-value storing area 20220 comprises an area 20221, an area 20222, an area 20223, etc. per respective ID. The last-time-value storing area 20230 also comprises an area 20231, an area 20232, an area 20233, etc. per ID. For example, the message of ID2 is stored so that the value (2) of its ID is memorized in the area 20211, the this-time-value (20) is memorized in the area 20221 and the last-time-value (18) is memorized in the area 20231.

In Process 2502, the value of the message read out is stored in the storing area of the this-time-value corresponding to the ID of this message. For example, in the case of the message of which ID is 2, the value of the message read out is stored in the area 20221. In the case of the message having ID of 6, the value of the message read out is stored in the area 20222.

Lastly, a message value change detecting process 2800 is started up (Process 2503). In starting up it, the message ID of the received message is given.

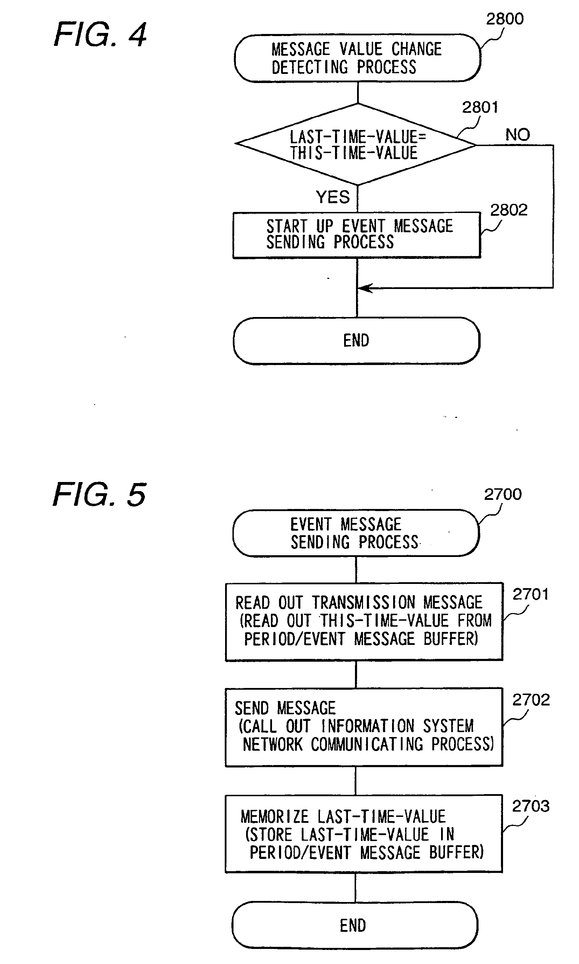

Next, themessagevaluechangedetectingprocess 2800 which is the process of the message value change detecting process 280 will be explained using Fig. 4. The message value change detecting process 280 is started up from the periodic message receiving process, as explained above.

The message value change detecting process 2800, when started up, first reads out the message stored in the period/event message buffer 202 to check whether or not the this-time-value of the received message is deferent from the last-time-value thereof (Process 2801). For example, if in Fig. 3 the ID of the message is 2, both are different since its this-time value is 20 and its last-time-value is 18. If the ID of the message is 6, both are the same since its this-time-value is 6400 and its last-time-value is also 6400.

If the last-time-value and the this-time-value are different from each other, the event message sending process 270 is started up (Process 2802), whereas if the last-time-value and the this-time-value are the same, the processing is completed without any additional process.

Next, an event message sending process 2700 which is the program of the event message sending process 270 will be explained by using Fig. 5. The event message sending process 2700 is started up in case where the value of the message fetched from the control system network is different from the last-time-value.

First, the event message sending process 2700 reads out the this-time-value of the message sent from the period/event message buffer 202 (Process 2701). For example, in Fig. 3 if the message having its ID of 2 is intended to be sent, the this-tame-value 20 stored in the area 20221 is read out.

Next, by calling up the information system network communication process 230, the transmission of the message is effected (Process 2702). This can be executed by calling out Send Message (), as stated above. In this embodiment, the messages are transmitted by using the same ID both in the control system network and in the information system network. Although different IDs can be used in both of the control system and the information system, in this case it is needed to memorize the correspondence between the ID used in the control system and the ID used in the information system.

Lastly, the this-time-value of the periodical event message buffer 202 is stored as the last-time-value (Process 2703). For example, in Fig. 3, in the case of the message having the ID of 2, the value which was stored in the area 20221 is stored in the area 20231.

The above-described explanation is the operation for transferring the message from the control system network 20 handling the periodic message to the information system network 30 handling the event message.

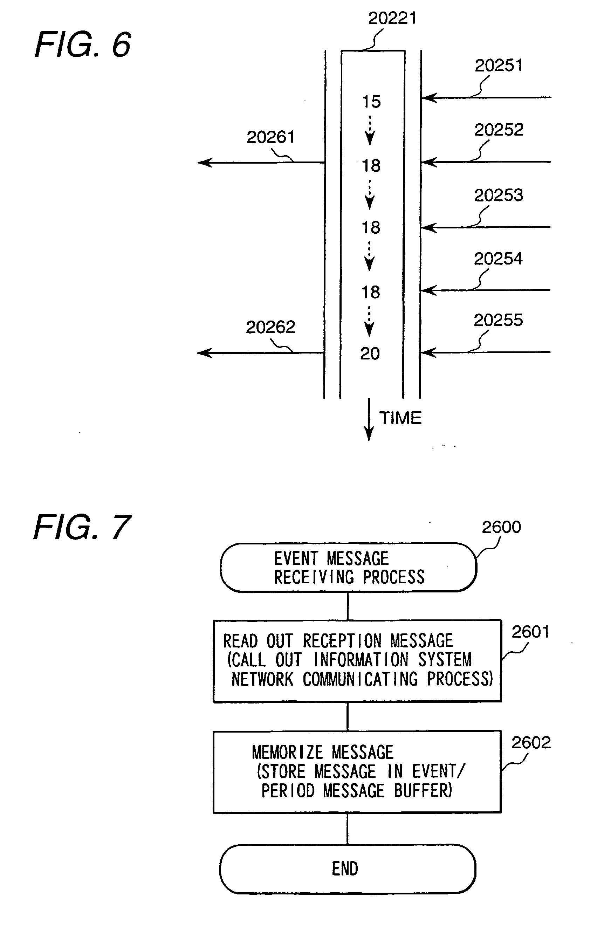

An example of operation for message transfer from the control system network 20 to the information system network 30 will be explained using Fig. 6. Fig. 6 shows that for the message having the ID of 2 in Fig. 3 the reception timing of the periodical message from the control system network 20, the transmission timing of the event message to the information system network 30, and the change of the storing area 20221 for the this-time-value of the message having the ID of 2 of the period/event message buffer. The figure shows the flow of time downwardly.

The periodical message is at a constant period, and received in the way of 20251, 20252, 20253, 20254, 20255. Incidentally, in this case, it is supposed that before the periodic message 20251 is received, the this-time-value of the message is 15. The value of the periodical message 20251 is 15, the values of 20252, 20253 and 20254 are 18 and the value of 20255 is 20. When the periodical message 20252 is received, the this-time-value changes from 15 to 18, and at this timing the event message 20261 having its value of 18 is transferred. Also, when the periodical message 20255 is received, the this-time-value changes from 18 to 20, and at this timing the event message 20262 having its value of 20 is transmitted.

As explained above, the message for the control system network 20 which is received periodically, only at the time when its value is different from the value which was received at the last time, is transferred to the information system network 30.

Next, message transfer from the information system network 30 handling the event message to the control system network 20 handling the periodical message will be explained. In this embodiment, it is supposed that all of the messages of the control system network 20 are the same in sending period.

The event message receiving process 260 is executed as one task. This task is started up in response to the reception event of the message on the information system network by means of the OS 210. Since on the information system network 30 the message is delivered in response to an event, this process (task) is also started up periodically in response to this event.

The flow of an event message receiving process 2600 which is the process of the event message receiving process 260 will be explained using Fig. 7. The event message receiving process 2600 first reads out the received message fetched from the information system network 30 (Process 2601). This is executed by calling out Receive Message () of the information system network communicating process 230, as explained above.

Next, the message read out is stored in the event/period message buffer 201 (Process 2602). Now, the construction of the event/period message buffer 201 will be explained using Fig. 8. The event/period message buffer 201 has a message ID storing area 20110 and a value storing area 20120. Further, these areas are divided into storing areas per ID. That is, the ID storing area 20110 is comprised of an area 20111, an area 20112, an area 20113, etc. The value storing area 20120 is comprised of an area 20121, an area 20122, an area 20123, etc. In Fig. 8, for example, in the case of the message having the ID value of 1, the value of the message read out is stored in the area 20121. In the case of the message having the ID value of 5, the value of the message read out is stored in the area 20122.

Next, a periodical message sending process 240 which is the process of the periodical message sending process 240 will be explained by using Fig. 9. The periodical message sending process 240 is started up periodically by the OS 210 in accordance with the transmission period of the message of the control system network. As mentioned above, in one embodiment of this invention, it is supposed that the transmission period of all of the messages of the control system network 20 is the same.

The periodical message sending process 2400 first reads out the value of the message to be delivered from the event/period message buffer 201 (Process 2401). Incidentally, all of the messages to be sent are administrated with their IDs. For example, in Fig. 8, in case where the message having its ID of 1 has been registered as the message to be sent, the this-time-value 100 stored in the area 20121 is read out.

Thereafter, the control system network communicating process 220 is called out to perform the transmission of the message (Process 2402). This can be achieved by calling out Send Message () as mentioned above. In this embodiment, the messages are transferred with the same ID in both of the control system and the information system, as mentioned above. Although different IDs can be used in the control system and the information system, in this case it is needed to memorize the correspondence between the ID used in the control system and the ID used in the information system.

The above-mentioned process 2401 and process 2402 are repeated until the processes for all messages are completed (Process 2403).

The above is the message transferring operation from the information system network 30 handling the event message to the control system network 20 handling the periodic message.

An example of the transferring operation from the information system network 30 to the control system network 20 will be explained using Fig. 10. Fig. 10 shows, for the message having the ID of 1 in Fig. 7, the reception timing of the event message from the information system network, the transmission timing of the periodical message to the control system network 20, and the change of the storing area 20121 in the value of the message having the ID of 1 in the event/period message buffer. In the figure, the downward flow of time indicates the passage of time.

The event messages are received in the way of 20161, 20162 and 20163. The value of the event message 20161 is 80, the values of 20162 is 90, and the value of 20163 is 100. On the other hand, the periodical messages are at a constant period, and are delivered in the way of 20151, 20152, 20153, 20154 and 20155. As the value of the periodical message, the value in the storing area 20151 for the message value at the point of time of the delivery is used. Therefore, the values of the periodical messages 20151, 20152 and 20153 are 80, and the values of the periodic messages 20154 and 20155 are 100.

Incidentally, although after the periodical message 20153 was delivered, the value changes to 90 by the reception of the event message 20162, this event message having the value of 90 is not delivered since before the next periodic message is delivered the value changes to 100 by the reception of the event message 20163.

As mentioned above, the messages of the information system network as received periodically in response to events are delivered to the control system network periodically.

An example of a distributed system for an automobile using the gateway of this embodiment is shown in Fig. 11. This distributed system has two networks, a control system network 20 and an information system network 30, which are connected through the gateway 10 as explained above.

To the control system network 20 the gateway 10 as well as an engine controlling unit 40 for controlling an engine and an ACC (Adaptive Cruise Control) controlling unit 50 for performing automobile travelling control to maintain the distance between a preceding car constant, are connected. Between the engine controlling unit, the ACC controlling unit and the gateway the information is exchanged by the periodical messages.

To the information system network 30 the gateway 10 as well as a navigation system 60 for performing course guidance and an internet terminal 70 for connecting to the internet to gather information are connected. Between the navigation system, the internet terminal and the gateway the information is exchanged by the event massages.

With such system construction, it is possible to exchange the information between the navigation system and the ACC unit or between the navigation system and the engine controlling unit. For example, it is possible to realize the function of performing inter-car distance control within the range below the restricted speed by delivering course limited speed information from the navigation system to the ACC unit. Also, by delivering engine status information such as engine speed or the like from the engine controlling unit to the navigation system it is possible to observe the engine status on the screen of the navigation system.

The above was the detailed explanation as to one embodiment of this invention.

In accordance with one embodiment of this invention, in the distributed system having the information system network and control system network within an automobile there exists the effect that a periodical message suitable to exchange the information for control can be used in the control system network and an event massage suitable to exchange the information for information processing can be used in the information system network, and that the control system network and the information system network in the automobile can be connected effectively.

Also, in accordance with one embodiment of this invention, the periodic message receiving process was started up in response to the received event of the message on the control system network. With it, it is possible to start up the receiving process as soon as the periodic massage reaches, and also to deliver the event message immediately upon the change of value. by this, the effect is provided that any time delay following the message transfer from the control system network to the information system network can be minimized.

Also, in accordance with one embodiment of this application, both of the control system network and the information system network was arranged by using the DAM network. Thus, by using the same kind of network in both networks, the effect that it is possible to make the system construction simple is provided, Also, there exists the effect that in the hardware it is possible to use a micro-controller which houses the CPU, the memory and two CAN controllers, and whereby the gateway can be installed compactly.

The control network 20 according to one embodiment of this invention was constructed using the CAN, but a network such as SAE/J1850, TTP (Time-Triggered Protocol) or the like may be used. Also, in one embodiment of this invention, the CAN was used in the information system network, but instead a network such as D2B Optical, IDB (ITS DATA Bus), VAN (Vehicle Area Network) or the like may be used. It is possible to use different networks between the control system network and the information system network. Since these various networks can be used, the effect is provided that it is possible to cope with a wider range of automobile systems. Also, there exists the effect that by using a high speed network it is possible to realize a system with high performance.

In one embodiment of this invention, the network communication process according to the OSEK-COM specification was used in the control system network communicating process 220 and the information system network communicating process 230. However, it is possible to use a control system network communicating process or information system network communicating process according to a specification such as IDB or the like. With this, the effect is provided that it is possible to apply it to a wider range of automobile systems.

In one embodiment of this invention, the transmission period of the control network was made constant regardless of the message, but it is possible to change the period per message. In this case, it is needed to memorize in the memory 200 the correspondence between the ID and the transmission timing of the periodical message. The OS 210 starts up the control system network communicating process 220 in conformity to the transmission timing of the periodical message, and transfers the ID of the message to be sent. The control system network communicating process 220, on the basis of the ID transferred from the OS 210, reads out the message of which ID agrees from the event/period message buffer, and performs the message transmitting process. Thus, the effect is provided that it is possible to set up the most appropriate transmission period per message and to use the network effectively.

In said one embodiment of this invention, the bi-directional message transfer was made between the control system network and the information system network. However, it may be modified to one directional transfer from the control system network to the information system network or from the information system network to the control system network. Thus, the effect is given that the exchange of information is limited so as thereby to improve security.

In said one embodiment of this invention, the periodical message receiving process was started up in response to the reception event of the message on the control system network. However, it may be started up at the same period as the periodical message.

Now, the case where the periodical message receiving process is started up at the same period, as the periodical message will be explained. In this case, the correspondence between the message ID to be received and the startup timing of the periodical message receiving process and the correspondence between the message ID to be sent and the startup timing of the periodical message sending process are stored in the memory 200. The OS 210 manages the startup timing of the periodical message receiving process and the startup timing of the periodical message sending process, and starts the periodical message receiving process 250 and the periodical message sending process 240. Also, the OS 210, when starting up the periodical message sending process 240, delivers the periodical message ID to be sent. In response thereto, the periodical message sending process shown in Fig. 9 is carried out, and the message corresponding to the delivered ID is transmitted. Also, the OS 210, when starting up the periodical message receiving process 250, delivers the periodical message ID to be received. In response thereto, the periodical message receiving process shown in Fig. 2 is executed, and the reception of the message corresponding to the delivered ID is performed.

Also, the periodic message receiving process may be performed as the same task as the periodical message sending process. By this, the effect is provided that it is possible to make the task construction simple.

In said one embodiment of this invention, the OS was used and the task was started up by the function of the OS. However, instead it is possible to start up and execute, without the OS, the periodical message receiving process by interrupt from the control system network controller, the event message receiving process by interrupt from the information system network controller and the periodical message sending process by interrupt from a timer. Thus, the effect is provided that the OS becomes unnecessary and the reduction of cost can be achieved.

In said one embodiment of this invention, one control system network and one information system network were connected. So, the networks 20 and 30, the network controllers 400 and 600, and the network drivers 50 and 700 corresponding to the control system network and information system network, respectively, were provided. However, instead, it is possible to connect a plurality of control system networks and a plurality of information system networks. To this end, it is needed to provide the control system network controllers, the control system network drivers and the control system networks corresponding to the number of the plurality of control system networks, respectively. Further, in the control system network communicating process 220 a function for performing allocation to this plurality of control system networks on the basis of the network IDS is provided. Also, the information system network controllers, the information system network drivers and the information system networks, the respective numbers corresponding to the number of the plurality of information system networks are provided, and a function is provided for performing allocation to these plurality of information system networks. By this, the effect is provided that it can cope with a large-scale system.

In said control system according to one embodiment of this invention, only the periodical message was used. However, instead, it is possible to use mixed event massage and periodical message in the control system network. In this case, at the time of the transfer from the control system network to the information system network, the periodical message is transferred after it was converted to the event message as in the one embodiment of the invention, whereas the event message is transfer as it is. Also, in the case of the transfer from the information system network to the control system network, there are the methods for transforming the event message into the periodical message as in the one embodiment of this invention, and for transferring it as it is. It is possible to properly use them depending upon the message. By this, the effect is provided that it is possible to use the event massage also in the control system, and in case where information having lesser changes is exchanged, it is possible to reduce the load of the network.

In the information system network according to said one embodiment of this invention, only the event message was used. However, instead, it is possible to use mixed event massage and periodical message in the information system network. In this case, when the transfer from the information system network to the control system network is carried out, the event message is transferred after is was transformed into the periodical message as in the case of the one embodiment of this invention, whereas the periodical message is trans as it is. In the case of the transfer from control system network to the information system network, there are the methods for transforming the periodical message into the event message as in the one embodiment of this invention, and for transferring it as the periodical message is. It is possible to properly use them depending upon the message. By this, the effect is provided that it is possible to use the periodical message also in the information system, and to improve real-time capacity as to multi-media information such as an image, and an audio.

In the distributed system according to said one embodiment of this invention, the control system network and the information system network were connected through the gateway which is of the type of an independent arrangement, but the gateway function may be incorporated within the controlling unit of the control system. An embodiment for this is shown in Fig. 12. In this embodiment, there are a control system network 20 and an information system network 30. To the control system network 20, an engine controlling unit 40 and an ACC control unit 50 are connected. Also, to the information system network 30, the engine controlling unit 40 and a navigation system 60 are connected. In this embodiment, a gateway function 410 is placed within the engine controlling unit 40, to cause the engine controlling unit 40 to have the gateway function. The gateway function 410 can be realized in the similar way to the gateway in one embodiment of this invention. By this, the effect is provided that there is no need to use an independent gateway, and therefore it is possible to reduce the cost.

In said one embodiment of this invention, the function of the gateway was realized by means of software, but it is possible to achieve the same function by means of hardware. By this, the effect can be obtained that the system is speeded up.

In said one embodiment of this invention, the control system network for transmitting the periodical message and the information system network for transmitting the event message were connected, but with a network for transmitting the periodical message and a network for transmitting the event message, they are not limited to the control system network and the information system network, respectively. For example, they may be a power train system control network using the periodic message and a body system control network using the event message, respectively. Also, they are not limited to the use in an automobile. For example, in the network handling the periodical message and the network handling the event message they are applicable to many systems such as an FA (Factory Automation) system, an electric power system, a railroad system, a steel system and the like. By this, there occurs the effect that in a distributed system having various networks a high efficiency gateway can be obtained.

### INDUSTRIAL APPLICABILITY

This invention can be applied to a field such as industrial machinery, an electric power, a railroad, steel, an automobile or the like in which a plurality of kinds of networks are interconnected.

## Claims

1. A distributed system for an automobile comprising:
a first network (20) to which at least one device (40, 50) for performing periodically the sending or receiving of a message is connected;
a second network (30) to which at least on device (60, 70) for performing the sending or receiving of a message in response to an event or demand; and
a gateway (10) connected to said first and second networks, said gateway comprising:
periodical message receiving means (250) for receiving messages which said first network sends periodically,
buffer means (201, 202) for storing the message received by said periodical message receiving means,
message value change detecting means (280) for detecting the change of the value of the data included in the message stored in said memory means, and
event message sending means (270) for producing a message from the data stored in said memory means when said message value change detecting means detects a change of the value of the data, and for delivering the produced message to said second network,
wherein said device for performing periodically the sending or receiving of messages is an engine controlling device (40) or an adaptive cruise control unit (50),
wherein said device for performing the sending or receiving of messages in response to an event or demand is a navigation system (60) or an internet terminal (70), and
wherein the message value change detecting means (280) is adapted to detect the change of the value of the data by checking whether or not the this-time-value of the received message is different from the last-time-value thereof.

2. The system of claim 1 wherein the gateway (10) comprises:
event message receiving means (260) for receiving an event message delivered onto said second network (30) in response to an event;
buffer means (201, 202) for storing the data of said event message; and
periodical message sending means (240) for delivering periodically the data stored in said memory means as a message on said first network (20).

3. The system as claimed in claim 1 or 2, comprising:
in said gateway (10) a processing means (100);said processing means of said gateway causing to memorize in said buffer means the message generated by said first network at a predetermined time interval, detecting a change of the value of the data included in said memorized message, producing a message from the data memorized in said buffer means when a change of the value of the data is detected, and delivering said produced message to said second network.

4. The system as claimed in claim 3, wherein said processing means is adapted to cause to memorize in said memory means the message generated in response to an event or demand from said second network, and to deliver said memorized message to said first network at a predetermined time interval.

## Patentansprüche

1. Verteiltes System für ein Automobil, das aufweist:
ein erstes Netzwerk (20), mit dem zumindest eine Vorrichtung (40, 50) zur regelmäßigen Durchführung des Sendens oder Empfangens einer Nachricht verbunden ist;
ein zweites Netzwerk (30), mit dem zumindest eine Vorrichtung (60, 70) zur Durchführung des Sendens oder Empfangens einer
nachricht als Reaktion auf ein Ereignis oder eine Nachfrage verbunden ist; und
ein Gateway (10), das mit dem ersten und zweiten Netzwerk verbunden ist, wobei das Gateway aufweist:
"regelmäßige Nachricht"-Empfangsmittel (250) zum Empfangen von Nachrichten, die das erste Netzwerk regelmäßig sendet, Puffermittel (201, 202) zum Speichern der Nachricht, die durch das "regelmäßige Nachricht"-Empfangsmittel empfangen wird, Nachrichten-Wertänderungs-Erfassungsmittel (280) zum Erfassen der Änderung des Wertes der Daten, die in der Nachricht enthalten sind, die in dem Speichermittel gespeichert ist, und Ereignis-Nachricht-Sendemittel (270) zum Erzeugen einer Nachricht aus den Daten, die in dem Speichermittel gespeichert sind, wenn das Nachrichten-Wertänderungs-Erfassungsmittel eine Änderung des Werts der Daten erfasst, und zum Liefern der erzeugten Nachricht an das zweite Netzwerk,
wobei die Vorrichtung zur regelmäßigen Durchführung des Sendens oder Empfangens von Nachrichten eine Motorsteuerungsvorrichtung (40) oder eine adaptive Geschwindigkeitsregelungseinheit (50) ist,
wobei die Vorrichtung zur Durchführung des Sendens oder Empfangens von Nachrichten als Reaktion auf ein Ereignis oder eine Nachfrage ein Navigationssystem (60) oder ein Internet-Terminal (70) ist, und
wobei das Nachrichten-Wertänderungs-Erfassungsmittel (280) ausgebildet ist, den Wert der Daten zu ändern durch Prüfen, ob der jetzige Wert der empfangenen Nachricht verschieden ist von deren letzten Wert oder nicht.

2. System gemäß Anspruch 1, wobei das Gateway (10) aufweist:
Ereignisnachricht-Empfangsmittel (260) zum Empfangen einer Ereignisnachricht, die auf dem zweiten Netzwerk (30) als Reaktion auf ein Ereignis geliefert wird;
Puffermittel (201, 202) zum Speichern der Daten der Ereignisnachricht; und
"regelmäßige Nachricht"-Sendemittel (240) zum regelmäßigen Liefern der Daten, die in dem Speichermittel gespeichert sind, als eine Nachricht auf dem ersten Netzwerk (20).

3. System gemäß Anspruch 1 oder 2, das aufweist:
in dem Gateway (10) ein Verarbeitungsmittel (100); wobei das Verarbeitungsmittel des Gateways veranlasst, in dem Puffermittel die Nachricht, die durch das erste Netzwerk erzeugt wird, in einem vorgegebenen Zeitintervall zu speichern, eine Änderung des Werts der Daten zu erfassen, die in der gespeicherten Nachricht enthalten sind, eine Nachricht aus den Daten zu erzeugen, die in dem Puffermittel gespeichert sind, wenn eine Änderung des Werts der Daten erfasst wird, und die erzeugte Nachricht an das zweite Netzwerk zu liefern.

4. System gemäß Anspruch 3, wobei das Verarbeitungsmittel ausgebildet ist, zu veranlassen, in dem Speichermittel die Nachricht zu speichern, die als Reaktion auf ein Ereignis oder eine Nachfrage von dem zweiten Netzwerk erzeugt wird, und die gespeicherte Nachricht in einem vorgegebenen Zeitintervall an das erste Netzwerk zu liefern.

## Revendications

1. Système réparti pour une automobile comprenant:
un premier réseau (20) auquel est connecté au moins un dispositif (40, 50) pour réaliser périodiquement l'envoi ou la réception d'un message;
un deuxième réseau (30) auquel est connecté au moins un dispositif (60, 70) pour réaliser l'envoi ou la réception d'un message en réponse à un évènement ou à une demande; et
une passerelle (10) connectée auxdits premier et deuxième réseaux, ladite passerelle comprenant:
un moyen de réception de messages périodiques (250) pour recevoir des messages que ledit premier réseau envoie périodiquement,
un moyen de mémoire tampon (201, 202) pour stocker le message reçu par ledit moyen de réception de messages périodiques,
un moyen de détection du changement de valeur du message (280) pour détecter le changement de valeur des données incluses dans le message stocké dans ledit moyen de mémoire, et
un moyen d'envoi de messages d'évènement (270) pour produire un message à partir des données stockées dans ledit moyen de mémoire quand ledit moyen de détection de changement de valeur des messages détecte un changement de valeur des données et pour délivrer le message produit en direction dudit deuxième réseau,
dans lequel ledit dispositif pour réaliser périodiquement l'envoi ou la réception des messages est un dispositif de commande moteur (40) ou une unité de commande de croisière adaptative (50),
dans lequel ledit dispositif pour réaliser l'envoi ou la réception des messages en réponse à un évènement ou une demande est un système de navigation (60) ou un terminal d'accès à Internet (70), et
dans lequel le moyen de détection du changement de valeur du message (280) est adapté à détecter le changement de valeur des données en vérifiant si oui ou non la valeur de cette fois-ci du message reçu est différente de la valeur de la dernière fois de celui-ci.

2. Système selon la revendication 1, dans lequel la passerelle (10) comprend:
un moyen de réception des messages d'évènement (260) pour recevoir un message d'évènement délivré sur ledit deuxième réseau (30) en réponse à un évènement;
un moyen de mémoire tampon (201, 202) pour stocker les données dudit message d'évènement; et
un moyen d'envoi de messages périodiques (240) pour délivrer périodiquement les données stockées dans ledit moyen de mémoire sous forme de message sur ledit premier réseau (20).

3. Système selon la revendication 1 ou 2, comprenant:
dans ladite passerelle (10), un moyen de traitement (100); ledit moyen de traitement de ladite passerelle provoquant la mémorisation dans ledit moyen de mémoire tampon du message généré par ledit premier réseau à un intervalle de temps prédéterminé, la détection d'un changement de valeur des données incluses dans ledit message mémorisé, la production d'un message provenant des données mémorisées dans ledit moyen de mémoire tampon, quand un changement de valeur des données est détecté, et la délivrance dudit message produit audit deuxième réseau.

4. Système selon la revendication 3, dans lequel ledit moyen de traitement est adapté à provoquer la mémorisation dans ledit moyen de mémoire du message généré en réponse à un évènement ou une demande provenant dudit deuxième réseau et la délivrance dudit message mémorisé audit premier réseau à un intervalle de temps prédéterminé.
